# EUROPÄISCHE PATENTSCHRIFT

(11) **EP 1 083 339 B1**
(45) Veröffentlichungstag und Bekanntmachung des Hinweises auf die Patenterteilung: **22.09.2004**
(21) Anmeldenummer: 00118563.6
(22) Anmeldetag: 26.08.2000
(51) Int. Cl.: F16B 1/00

(54) **Kunststoff-Befestigungsvorrichtung**
Fastening device in synthetic material
Dispositif de fixation en matériau synthétique

(30) Priorität: 08.09.1999 DE 19942829
(43) Veröffentlichungstag der Anmeldung: 14.03.2001
(73) Patentinhaber: Uponor Innovation AB, 513 81 Fristad (SE)
(72) Erfinder: Riesselmann, Fanz-Josef, 49393 Lohne (DE)
(74) Vertreter: Hilleringmann, Jochen, Dipl.-Ing.

(56) Entgegenhaltungen:
- GB-A- 2 320 277
- PATENT ABSTRACTS OF JAPAN vol. 016, no. 575 (C-1011), 15. Dezember 1992 (1992-12-15) & JP 04 224843 A (SUMITOMO METAL IND LTD), 14. August 1992 (1992-08-14)
- "DISASSEMBLY HELPED BY SHAPE MEMORY POLYMER SCREWS" EUROPEAN PLASTICS NEWS, IPC BUSINESS PRESS LTD. LONDON, GB, Bd. 26, Nr. 4, April 1999 (1999-04), Seite 19 XP000958844 ISSN: 0306-3534
- PATENT ABSTRACTS OF JAPAN vol. 1995, no. 07, 31. August 1995 (1995-08-31) & JP 07 110020 A (MATSUSHITA ELECTRIC IND CO LTD), 25. April 1995 (1995-04-25)
- PATENT ABSTRACTS OF JAPAN vol. 018, no. 212 (M-1593), 15. April 1994 (1994-04-15) & JP 06 010926 A (HITACHI LTD), 21. Januar 1994 (1994-01-21)

## Beschreibung

Die Erfindung betrifft eine Kunststoff-Befestigungsvorrichtung zur Befestigung eines ersten Teils an einem zweiten Teil mittels Verankerung in einer Aussparung in mindestens einem der beiden Teile.

Kunststoff-Befestigungselemente in Form von Schrauben, Nieten, Spreizdübeln und Schnappern sind in den unterschiedlichsten Ausgestaltungen bekannt. Derartige Befestigungselemente werden in einer Vielzahl von Anwendungsfällen zur Befestigung zweier Teile eingesetzt. Dabei werden diese Befestigungselemente durch eine Aussparung (z.B. Bohrung) des ersten Teils hindurch bis in eine korrespondierende Aussparung des zweiten Teils gesteckt, wo sie dann mechanisch gehalten werden.

Die Forderung des Gesetzgebers nach der Herstellung recycelfähiger Produkte lässt sich dann sinnvoll umsetzen, wenn die Einzelteile des Produkts auf einfache Weise demontiert werden können. Das bedeutet, dass die obigen bekannten Kunststoff-Befestigungselemente entfernt werden müssen, um die Produkte bzw. Einheiten in ihre Einzelteile zerlegen zu können. Der Vorgang des Entfernens der Befestigungselemente ist mitunter recht mühselig und teilweise nur unter Inkaufnahme der Zerstörung der Einzelteile möglich.

Eine recht einfache und zerstörungsfreie Demontage recyclefähiger Produkte wird durch Befestigungselemente ermöglicht, die ein Material mit sogenanntem Memory-Effekt bzw. Formerinnerungsvermögen aufweisen.

JP-A-04 224843 beschreibt ein Polyolefin-Verbundmaterial bestehend aus einem Polyolefinharz und einem kristallinen Copolymerharz mit Memory-Effekt.

JP-A-07 110020 offenbart eine Verbindungstechnik, bei der zwei Bauteile durch einen Hohlstift aus Formerinnerungsmaterial zusammengehalten werden, in dem der Hohlstift in entsprechende Öffnungen der Bauteile eingesetzt und dann erwärmt, daraufhin mit Hilfe eines Gases aufgeweitet und schließlich abgekühlt wird. Zur Demontage der Bauteile wird der Hohlstift erneut erwärmt, so dass er seine ursprüngliche Form annimmt und aus den Öffnungen entfernt werden kann.

Die GB-A-2 320 277 beschreibt Befestigungselemente unterschiedlicher Ausführungen aus Formerinnerungsmaterialien, wie beispielsweise metallische Formerinnerungslegierungen und Kunststoffe mit Memory-Effekt, insbesondere Polyurethan.

Der Artikel "Disassembly helped by shape memory polymer screws", European Plastics News, IPC Business Press Ltd., London, GB, Bd. 26, Nr. 4, April 1999 (1999-04), Seite 19, XP000958844 beschreibt Befestigungsschrauben mit Memory-Effekt aus einem Polyurethan-Verbundmaterial.

Der Erfindung liegt daher die Aufgabe zugrunde, eine Kunststoff-Befestigungsvorrichtung zu schaffen, die sich auf einfache Weise ohne großen Aufwand wieder lösen lässt, wenn dies beispielsweise im Falle der Recyclebarkeit von Produkten erforderlich ist.

Zur Lösung dieser Aufgabe wird mit der Erfindung eine Kunststoff-Befestigungsvorrichtung zur Befestigung eines ersten Teils an einem zweiten Teil mittels Verankerung in einer Aussparung in mindestens einem der beiden Teile vorgeschlagen, wobei diese Kunststoff-Befestigungsvorrichtung versehen ist mit
- einem in Kunststoffspritzgusstechnik hergestellten Befestigungselement aus einem Kunststoff-Material mit Memory-Effekt mit einem Schaft, wobei
- der Schaft in seinem Ausgangszustand nach dem Spritzgießen eine kleinere Querschnittsfläche aufweist als die Aussparung,
- zumindest der Schaft in erwärmtem Zustand derart verformt wird, dass er über die Querschnittsfläche der Aussparung überstehende Bereiche aufweist, und
- der Schaft im so verformten Zustand abgekühlt wird,
- so dass der Schaft durch Erwärmung aufgrund des Memory-Effekts in seinen Ausgangszustand zurückformbar ist.

Die erfindungsgemäße Kunststoff-Befestigungsvorrichtung ist dadurch gekennzeichnet, dass das Befestigungselement ein vernetztes Polyolefin, insbesondere PEX aufweist.

Grundgedanke der Erfindung ist es, dass ein durch Warmumformung verformtes Kunststoff-Befestigungselement durch Erwärmen wieder in seinen Ausgangszustand vor der Warmumformung rückverformbar ist. Der Grund hierfür ist in dem sogenannten Memory-Effekt einiger Kunststoffmaterialien zu sehen. Ausgangsprodukt der erfindungsgemäßen Kunststoff-Befestigungsvorrichtung ist ein als Spritzguss-Kunststoffteil hergestelltes Befestigungselement aus einem Kunststoff-Material mit Memory-Effekt, das im einfachsten Fall lediglich einen Schaft aufweist. Es handelt sich bei dem Befestigungselement also um einen Stift, Bolzen oder dgl. Die Querschnittfläche des Schafts des spritzgusstechnisch hergestellten Befestigungselements ist dabei in seinem Ausgangszustand nach dem Spritzgießen kleiner als die Querschnittsfläche der Aussparung oder Aussparungen, in die das Befestigungselement zwecks Befestigung zweier Teile eingeführt wird. Durch Warmumformen, das heißt durch Umformen des Befestigungselements nach dessen Erwärmung wird das Befestigungselement bzw. der Schaft des Befestigungselements derart verformt, dass seine Querschnittsfläche nunmehr über die Querschnittsfläche der Aussparung bzw. der Aussparungen überstehende Bereiche aufweist. In dem so verformten Zustand wird das erwärmte verformte Befestigungselement anschließend abgekühlt. Auf diese Weise wird sozusagen die Verformung des Befestigungselements eingefroren". Unter Normaltemperaturbedingungen behält das verformte Befestigungselement seine durch die Warmumformung verliehene Form bei. Bei dieser Form kann es sich beispielsweise um ein Gewinde handeln, das außen auf dem Schaft ausgebildet ist. Als Alternative kann zumindest ein oder vorzugsweise beide Enden des Schafts verbreitert sein (Niet-Struktur). Eine dritte Möglichkeit besteht darin, andere Vorsprünge als die eines Gewindegangs an dem Schaft vorzusehen, so dass der Schaft mit der Aussparung der Teile verrastbare Rastelemente aufweist, die radial vom Schaft abstehen und nach Art von Widerhaken das Befestigungselement in der Aussparung verankern. Eine weitere Möglichkeit ist in der Ausbildung des Befestigungselements nach der Warmumformung als tannenbaumartiges" Verankerungselement zu sehen.

Der Vorteil des derart warmumgeformten Befestigungselements aus Kunststoff mit Memory-Effekt besteht in der Rückverformbarkeit durch Erwärmung des Befestigungselements. Dann nämlich geht die Form des Befestigungselements wieder in diejenige in ihrem Ausgangszustand zurück. Die zuvor noch mit der Aussparung bzw. mit den Aussparungen der beiden Teile verhakten oder diese Aussparungen hintergreifenden Vorsprünge des Schaftes bilden sich also selbständig zurück, so dass die Querschnittsfläche des Schafts auf ein Maß schrumpft, das kleiner ist als die Querschnittsfläche der Aussparung. Damit aber lässt sich nun das Befestigungselement auf einfache Weise aus der oder den Aussparungen herauslösen. Letztendlich ist also zum Trennen zweier mittels der erfindungsgemäßen Kunststoff-Befestigungsvorrichtung verbundener Teile lediglich noch erforderlich, das Befestigungselement einer erhöhten Temperatur auszusetzen, die oberhalb der Kristallisationstemperatur des Kunststoffes liegt. Das vereinfacht den Trennvorgang beider Teile ganz enorm und verhindert insbesondere, dass mit dem erfindungsgemäßen Befestigungselement verbundene Teile zerstört werden müssen, um voneinander getrennt zu werden.

Bei dem Material für das Befestigungselement der erfindungsgemäßen Kunststoff-Befestigungsvorrichtung handelt es sich um vernetztes Polyolefin. Bevorzugt wird (chemisch oder strahlen-) vernetztes PE-Material eingesetzt.

Nachfolgend wird die Erfindung anhand der Zeichnung näher erläutert. Im einzelnen zeigen:
- Fig. 1: den Umformvorgang zum Umformen eines gespritzten Befestigungselement-Rohlings zu einer Kunststoffschraube und deren Rückverformung zum Rohling nach einer Erwärmung und
- Fig. 2: ähnlich Fig. 1 die Umformung des Rohlings in einen Niet und dessen Rückumformung in den Rohling nach Erwärmung aufgrund des Memory-Effekts.

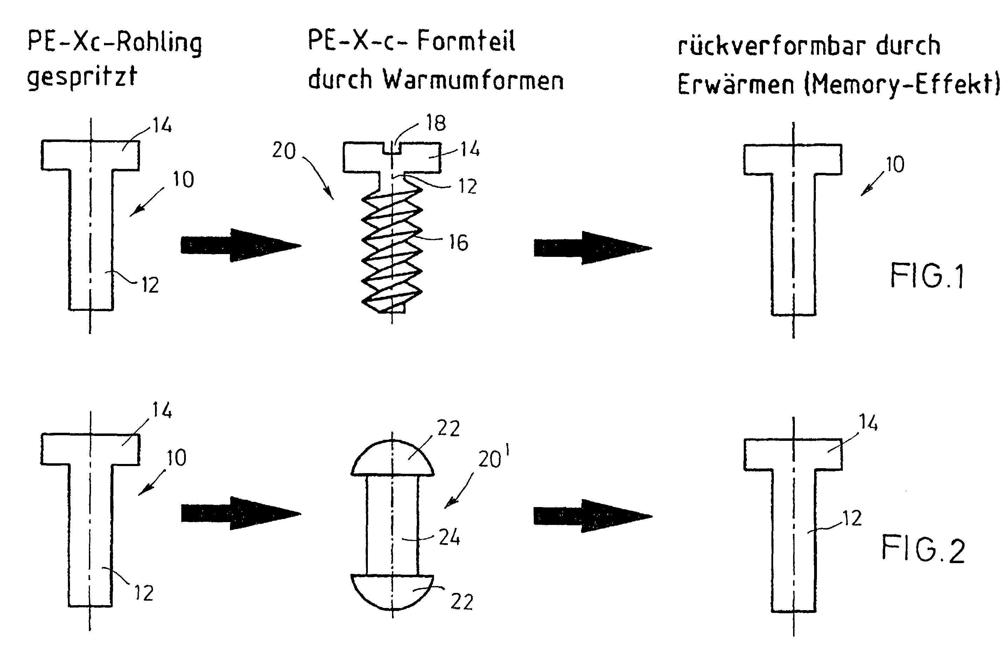

Bei dem Ausführungsbeispiel der Erfindung gemäß Fig. 1 geht es um die Herstellung einer Kunststoff-Schraube durch Warmumformen eines Rohlings. Bei dem Rohling handelt es sich um einen in Seitenansicht T-förmigen Bolzen 10, der einen Schaft 12 und ein verbreitertes Kopfstück 14 aufweist. Der Schaft 12 weist dabei einen geringeren Durchmesser auf als die Bohrung bzw. Aussparung, für die der Bolzen 10 vorgesehen ist. Bei dem Bolzen 10 handelt es sich um ein Kunststoff-Spritzgussteil aus PEX-Material.

Der Rohling wird anschließend erwärmt und im erwärmten Zustand zu einer Schraube verformt. Das bedeutet, dass der Schaft 12 nunmehr mit einem Außengewinde 16 versehen ist, während das Kopfstück 14 mit einem Schlitz bzw. Kreuzschlitz 18 versehen ist. Nach Erwärmung und Verformung des Rohlings wird dieser unter Beibehaltung seiner Verformung abgekühlt. Die Abkühlung erfolgt also in der Warmpressform. Nach der Abkühlung entsteht also dann ein Schrauben-Befestigungselement 20, das so lange, wie seine Temperatur nicht oberhalb der Kristallisationstemperatur des Kunststoffmaterials ist, seine Form beibehält.

Das Schrauben-Befestigungselement 20 kann nun zum Festschrauben eines ersten Teils an einem zweiten Teil verwendet werden. Das Gewinde 16 wirkt dabei mit einem korrespondierenden Gewinde an einem der beiden Teile oder einfach nur mit dem Lochrand eines der beiden Teile zusammen. Zum Trennen der mittels des Schrauben-Befestigungselements 20 verbundenen Teile bedarf es nunmehr lediglich noch der Erhitzung des Schrauben-Befestigungselements 20 über dessen Kristallisationstemperatur hinaus, dann nämlich kommt es aufgrund des Memory-Effekts des Kunststoffmaterials zu einer selbsttätigen Rückverformung in den Zustand nach dem Spritzgießen.

In Fig. 2 ist eine alternative Ausgestaltung eines erfindungsgemäßen Befestigungselements dargestellt. Ausgangspunkt ist wiederum ein Rohling 10, der einen Schaft 12 und ein verbreitertes Kopfstück 14 aufweist. Dieser Rohling 10 wird durch Warmumformung zu einem Niet-Befestigungselement 20' umgeformt, das zwei linsenkopfähnliche Enden 22 und einen Schaft 24 dazwischen aufweist. Dieses Niet-Befestigungselement 20' kann nun zum Befestigen bzw. Verbinden zweier Teile eingesetzt werden, wobei sich sein Schaft 24 durch zwei korrespondierende Bohrungen bzw. Aussparungen in den zu verbindenden Teilen erstreckt. Durch Erwärmen des Niet-Befestigungselements 20' bis über die Kristallisationstemperatur des Kunststoffmaterials, auf dem der Rohling 10 in Spritzgusstechnik hergestellt ist, nimmt das Niet-Befestigungselement 20' wieder die Form des Rohlings 10 an, der, da das dem Kopfstück 14 gegenüberliegende Ende 12 des Schafts nun nicht mehr aufgeweitet ist, sich problemlos aus den Bohrungen bzw. Aussparungen der zuvor verbundenen Teile herausziehen lässt.

Die rückverformten Schrauben- bzw. Niet-Befestigungselemente 20,20' gemäß Fign. 1 und 2 lassen sich insoweit wiederverwenden, als sie das Ausgangsprodukt für eine neuerliche Warmumformung sein können. Damit sind die hier beschriebenen Befestigungselemente bzw. die Vorgängerprodukte (Rohlinge) ebenfalls recyclebar, was von Vorteil ist.

Es sei an dieser Stelle erwähnt, dass das Ausgangsprodukt, also das Spritzguss-Kunststoffbefestigungselement nicht notwendigerweise so, wie zuvor beschrieben und in der Zeichnung dargestellt, ausgebildet zu sein braucht. So kann auch ein (zylindrischer) Stift oder Bolzen verwendet werden, also ein Element, das lediglich einen Schaft ohne verbreitertes Kopfteil aufweist.

## Patentansprüche

1. Kunststoff-Befestigungsvorrichtung zur Befestigung eines ersten Teils an einem zweiten Teil mittels Verankerung in einer Aussparung in mindestens einem der beiden Teile, mit
- einem in Kunststoffspritzgusstechnik hergestellten Befestigungselement (20;20') aus einem Kunststoff-Material mit Memory-Effekt mit einem Schaft (12), wobei
- der Schaft (12) in seinem Ausgangszustand nach dem Spritzgießen eine kleinere Querschnittsfläche aufweist als die Aussparung,
- zumindest der Schaft (12) in erwärmtem Zustand derart verformt wird, dass er über die Querschnittsfläche der Aussparung überstehende Bereiche (16,22) aufweist, und
- der Schaft (12) im so verformten Zustand abgekühlt wird,
- so dass der Schaft (12) durch Erwärmung aufgrund des Memory-Effekts in seinen Ausgangszustand zurückformbar ist,
**dadurch gekennzeichnet ,**
- **dass** das Befestigungselement (20;20') ein vernetztes Polyolefin aufweist.

2. Kunststoff-Befestigungsvorrichtung nach Anspruch 1, **dadurch gekennzeichnet, dass** das vernetzte Polyolefin PEX ist.

3. Kunststoff-Befestigungsvorrichtung nach Anspruch 1 oder 2, **dadurch gekennzeichnet, dass** die Verformung des Schafts (12) an dessen Außenfläche in Form mindestens eines Vorsprungs, insbesondere eines Gewindes (16) erfolgt.

4. Kunststoff-Befestigungsvorrichtung nach Anspruch 1 oder 2, **dadurch gekennzeichnet, dass** die Verformung des Schafts (12) an mindestens einem seiner beiden Enden in Form einer Verbreiterung (22) erfolgt.

## Claims

1. Fastening device of plastic material for fastening a first part to a second part by anchoring in a recess in at least one of the two parts, comprising
- a fastening element (20; 20') with a shaft (12), the element being made by an plastics injection moulding technique from a plastic material having a memory effect, wherein
- in the initial state after the injection moulding, the shaft (12) has a smaller cross-sectional area than the recess,
- at least the shaft (12), when in the heated condition, is deformed such that is has portions (16, 22) protruding beyond the cross-sectional area of the recess, and
- the shaft (12) is cooled in the thus deformed state,
- so that the shaft (12), due to the memory effect, can be restored to its initial state by heating,
**characterized in that**
- the fastening element (20; 20') comprises a cross-linked polyolefin.

2. Fastening device of plastic material according to claim 1, wherein the cross-linked polyolefin is PEX.

3. Fastening device of plastic material according to claim 1 or 2, wherein the deformation of the shaft (12) at its outer surface takes the form of at least one projection, in particular a thread (16).

4. Fastening device of plastic material according to claim 1 or 2, wherein the deformation of the shaft (12) at at least one of its two ends takes the form of an enlargement (22).

## Revendications

1. Dispositif de fixation en matière plastique pour fixer une première partie à une seconde partie moyennant un ancrage dans un évidement dans au moins l'une des deux parties, comportant
- un élément de fixation (20;20') fabriqué selon la technique de moulage par injection de matière plastique et réalisé en une matière plastique ayant un effet de mémoire et comportant une tige (12), dans lequel
- la tige (12) dans son état initial après le moulage par injection, possède une surface en coupe transversale inférieure à celle de l'évidement,
- au moins la tige (12) est déformée à l'état chauffé de telle sorte qu'elle possède des zones (16,22) qui font saillie au-delà de la surface en coupe transversale de l'évidement, et
- la tige (12) est refroidie à l'état ainsi déformé,
- de telle sorte que la tige (12) peut se déformer en retour, par échauffement, en étant amenée dans son état initial, à raison de l'effet de mémoire,
**caractérisé en ce**
- **que** l'élément de fixation (20;20') comporte une polyoléfine réticulée.

2. Dispositif de fixation en matière plastique selon la revendication 1, **caractérisé en ce que** la polyoléfine réticulée est du PEX.

3. Dispositif de fixation en matière plastique selon la revendication 1 ou 2, **caractérisé en ce que** la déformation de la tige (12) au niveau de sa surface extérieure s'effectue sous la forme d'au moins une partie saillante, notamment d'un filetage (16).

4. Dispositif de fixation en matière plastique selon la revendication 1 ou 2, **caractérisé en ce que** la déformation de la tige (12) s'effectue au moins au niveau de l'une de ses deux extrémités, sous la forme d'un élargissement (22).
